# EUROPEAN PATENT APPLICATION

(11) **EP 0 886 458 A2**
(43) Date of publication of application: **23.12.1998**
(21) Application number: 98109413.9
(22) Date of filing: 23.05.1998
(51) Int. Cl.: H05B 3/14

(54) **Molybdenum disilicide heating element and its production method**

(30) Priority: 23.05.1997 JP 134064/97
(71) Applicant: Kabushiki Kaisha Riken, Chiyoda-ku, Tokyo 102-0073 (JP)
(72) Inventor: Jiang, Wan, Kumagaya-shi, Saitama 360-0031 (JP); Tsuji, Kenichi, Kumagaya-shi, Saitama 360-0031 (JP); Uchiyama, Tetsuo, Kumagaya-shi, Saitama 360-0031 (JP)
(74) Representative: Cohausz & Florack

(57) **Abstract**

A low-temperature oxidation resistant MoSi₂ ceramic heating element(1, 4), operated at 1000°C or less is a (Mo_{1-x,}Wₓ)Si₂ (0≦x≦0.45). The impurities are 0.1 mass % or less in total, and Fe, Cu, Au, Ca and Al among the impurities are 0.05 mass % or less, in each. A protective SiO₂ film of from 10µm to 100µm is formed on the entire portion of the body of the heating element except for the electric conductive coating parts on the power-feeding terminals.

## Description

### BACKGROUND OF INVENTION

### 1. Field of Invention

The present invention is related to a molybdenum disilicide based ceramic heating element which is particularly used in an oxidizing and diffusion furnace or LP-CVD (Low Pressure Chemical Vapor Deposition) furnace for manufacturing semiconductor devices, and operated at a temperature of specifically 1000°C or less. In addition, the present invention is related to a production method of such heating element.

### 2. Description of Related Art

Heretofore, an Fe-Cr-Al based, metallic heating element has been used in a heat treatment furnace for producing semiconductor devices, such as an oxidizing and diffusion furnace and an LP-CVD furnace. In order to miniaturize semiconductor devices and to enhance the competitive power by reducing the production cost, the MoSi₂ heating element has recently tried to use for the development of the rapid thermal processing. Since a high temperature capability of the MoSi₂ heating element is superior to that of the metallic heating element, the surface power density in the MoSi₂ heating element is as high as approximately ten times that of the metallic heating element. For example, the permissible level of the metallic heating element at 1000°C is 2W/cm², while that of the MoSi₂ heating element at 1000°C is 20W/cm². This feature readily leads to increasing the rates of temperature elevation. Specifically, in the case of a diffusion furnace, one heat treatment cycle can be shortened by 60% or more, i.e., the conventional 200 minutes or more can be shortened to 80 minutes or less.

As is well known, in the production of a heating element, the sintered molybdenum disilicide is bent and subsequently electric conductive metallic coating is applied on the power-feeding terminals. The so-produced heating element is widely used in various high-temperature heating furnaces. When the MoSi₂ heating element is operated in a temperature of more than 1400°C and under ambient environment, it can be stably operated since a dense protective film consisting of SiO₂ is formed on the surface. However, in a temperature range between 400°C and 1000°C operated in the oxidizing and diffusion furnace and the LP-CVD furnace, low-temperature oxidation, which is a characteristic of the MoSi₂ heating element, occurs and the polycrystalline element is pulverized. This is the so-called pest phenomenon and makes the life of MoSi₂ heating element unsatisfactory for the users.

The present applicant proposed in Japanese Unexamined Patent Publication (Kokai) No. 8-143,365 published June 4, 1996 (Japanese Patent Application No. 6-280,706) to form the silicon carbide (SiC) film on the surface of MoSi₂ heating element by CVD. The effects attained by this SiC film are, however, not yet satisfactory.

### SUMMARY OF INVENTION

It is, therefore, an object of the present invention to provide the MoSi₂ heating element with suppressed low-temperature oxidation, which can be operated in a low-temperature heating furnace such as a heat treatment furnace for producing semiconductor devices, over a prolonged life.

It is a further object of the present invention to provide a method for producing a dense MoSi₂ heating element with suppressed low-temperature oxidation.

The present inventors extended discussion, in Journal of Japan Institute of Metals Vol. 61, No. 3(1997), pages 247248, how the low-temperature oxidation of an MoSi₂-based ceramic composite used as the light source of infrared ray could be prevented when the material was electrically heated by direct current This low-temperature oxidation has a relationship with the present invention. It was observed in the experiments that the low-temperature oxidation was strongly dependent upon the purity of raw materials, environmental humidity and current density. More specifically, it was discovered that the low-temperature oxidation was more suppressed, when the material purity was higher, the environmental humidity was lower, and the current density was lower.

After Japanese Unexamined Patent Publication (Kokai) No. 9-132,460 published May 20, 1997 (Japanese Patent Application No. 7-291,180), in which a (Mo_{1-x,} Wₓ)Si₂ solid solution ceramic with high temperature creep resistance is proposed, researches made by the present inventors revealed that a dense protective SiO₂ film was relatively easily formed on the surface of (Mo_{1-x,} Wₓ)Si₂ solid solution ceramic material. More specifically, the so-called selective oxidation phenomenon occurs during the formation of a protective SiO₂ film on a metallic silicide such that: the metal atoms are first oxidized and then vaporized; and, the remaining silicon atoms are caused to react with oxygen to form a dense protective SiO₂ film. Since the (Mo_{1-x,}Wₓ)Si₂ solid solution ceramic contains W, which is more vaporizable than Mo, the selective oxidation is so promoted that the protective SiO₂ film is more easily and thickly formed than the conventional MoSi₂.

In accordance with the objects of the present invention, there is provided the low-temperature oxidation resistant heating element, which comprises: a body of the heating element comprising MoSi₂ and impurities which are 0.1 mass % or less in total, and Fe, Cu, Au, Ca and Al of which impurities are 0.05 mass % or less, in each; a power-feeding terminal having an electric conductive coating thereon; and, a protective SiO₂ film being from 10 µm to 100 µm thick covering the entire portion of the body of the heating element except for the electric conductive coating.

The present inventors extensively considered the discussions and discoveries mentioned above with regard to the low-temperature oxidation and arrived at the following conclusions (a)-(d) to elongate the life of the heating element of a furnace satisfactorily for manufacturing semiconductor devices. (a) The raw materials of the MoSi₂ should be carefully selected among those to decrease the impurities as much as possible. (b) The composition should be based on the (Mo_{1-x,}Wₓ)Si₂ solid solution ceramic, since a thick and dense protective SiO₂ film can relatively easily be formed. (c) In the production steps of a heating element, the shaping should be carried out using an organic binder, which should be then repeated in the degreasing step so as to lessen the impurity level as low as possible. (d) Aluminum is flame-sprayed on the power-feeding terminal part. Except for this part, the satisfactory thick and dense protective SiO₂ film should be formed on the entire surface portion of the heating element prior to its installation in a furnace.

A method for producing a low-temperature oxidation resistant heating element comprises the steps of:
preparing a first powder comprising MoSi₂ or (Mo_{1-x,}Wₓ) Si₂ (0<x≦0.45) and impurities which are 0.1 mass % or less in total, and Fe, Cu, Au, Ca and Al of which impurities are 0.05 mass % or less, in each;
adding water and an organic binder to the first powder;
kneading the mixture of first powder, water and organic binder;
shaping the kneaded mixture to form a shaped compact;
drying the shaped compact;
degreasing, thereby removing the organic binder from the shaped compact;
degreasing, thereby removing the organic binder from the shaped compact;
sintering the shaped compact at a temperature of from 1650 °C to 1800°C in a non-oxidizing atmosphere or in vacuum, thereby obtaining a sintered compact;
and subjecting the sintered compact to a current conduction heating or external heating, thereby forming a protective SiO₂ film having a thickness of from 10µm to 100µm on the surface of the sintered compact.

Now, the low-temperature oxidation heating element according to the present invention is described.

It is important from the view point of low-temperature oxidation that the purity of raw material used should be as high as possible and the impurities in the ceramic should be as low as possible. In the process of low-temperature oxidation, the SiO₂ film on the MoSi₂ surface is first destroyed by some electrochemical mechanism and then oxidation, which accompanies the pulverization of MoSi₂, starts. When the material purity is high, the influence of the environmental humidity and the like upon the oxidation is lessened, although the reason is not clear. The destruction of the protective SiO₂ film due to the electrochemical mechanism is impeded and the subsequent oxidation speed of MoSi₂ is lessened.

It is desirable to use the raw material having as high purity as possible from the point of view of semiconductor devices. The impurity elements, which are contained in trace in MoSi₂, vaporize from the heating element in a furnace, pass through the inner tube of the furnace, i.e., a quartz tube, and then contaminate a semiconductor wafer(s) being heated in the quartz-tube reactor. When a material of high purity is used in a furnace chamber or outside, device failures due to heavy metals, such as Fe, Cu and the like as well as Au, Ca and Al contained in the furnace construction materials, become less likely to occur. In the present invention, the impurities other than Mo and Si are limited to 0.1 mass % or less in total, and the amount of each of Fe, Cu, Au, Ca and Al is limited to 0.05 mass % or less, preferably 0.03 mass % or less. The impurities limited as above may be in the form of metal, a compound form or any other form, which is not at all limited.

The thickness of the protective SiO₂ film is in a range of from 10µm to 100µm in the present invention, because at a thickness less than 10µm the life under low-temperature oxidizing condition is not satisfactorily long, while at a thickness more than 100µm the protective SiO₂ film is liable to flake off when it is exposed to thermal stress due to the heat cycle. The life is also not satisfactorily long in the latter case. It is desirable that the thickness of the protective SiO₂ film is in a range of from 15µm to 50µm.

The protective SiO₂ film must cover the heating element except for the power-feeding terminal part. The MoSi₂ surface must not be exposed due to film defects, cracks and other defects, because any such defects cause the low-temperature oxidation of MoSi₂, which oxidation readily leads to the entire pulverization of MoSi₂. In this case, desirable low-temperature oxidation resistance cannot be attained. The "dense" protective SiO₂ film means the protective film free of the defective portions, cracks and the like.

The present invention is furthermore described with reference to the drawings.

### BRIEF DESCRIPTION OF DRAWINGS

Figure 1 shows a meander-type multi-shank heating element.

Figure 2 shows a spiral-type heating element.

Figure 3 shows a flat-type multi-shank heating element used in a furnace in which a single wafer is treated.

Figure 4 is a front view of the heating element subjected to evaluation of the life.

Figure 5 shows a meander-type multi-shank heating element produced in Examples.

### DESCRIPTION OF PREFERRED EMBODIMENTS

In the production process of the low-temperature oxidation resistant heating element described above, the raw materials should be crushed (milled) to 5µm or less, preferably 2µm or less in the crushing (milling) step, while preventing the contamination with metal. The raw materials should, therefore, be pulverized by air-flow crushing. Organic binder and water are then added to the crushed (milled) raw materials and are kneaded. The extrusion to form a rod is then carried out. After drying and degreasing, the sintering is carried out at a temperature of from 1650°C to 1800°C in a non-oxidizing atmosphere or under vacuum. The sintered rod is then heated by current conduction or any external heating means to form the protective SiO₂ film on the surface of the rod.

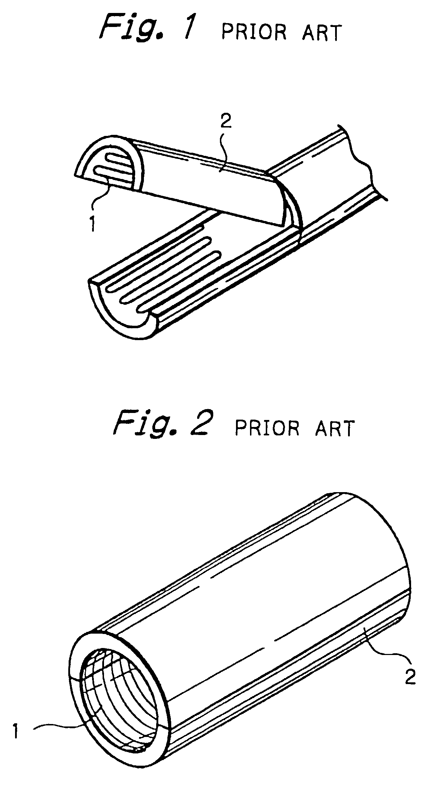

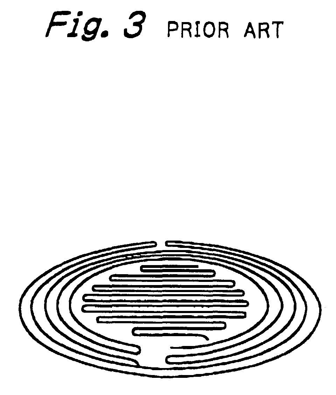

The rod is then bent or welded to form the meander-type multi-shank heating element 1 (Fig. 1) which is mounted on the semi-cylindrical heat-insulating material 2 used in a batch-type heat treatment furnace. The shaped rod may be a spiral-type heating element 1 as shown in Fig. 2. The shaped rod may also be a flat-type multi-shank heating element as shown in Fig. 2. The shaped rod may also be a flat-type multi-shank heating element as shown in Fig. 3, which is used in a furnace in which a single wafer is treated. Prior to mounting the heating element in a furnace, the heating element may be heated by current conduction or any external heating means to form the perfect and dense protective SiO₂ film having an appropriate thickness on the entire portion of the heating element, because some portions of the element may not yet be covered by such film.

The low-temperature oxidation resistant heating element is furthermore described.

The MoSi₂-based ceramic used in the present invention may be a W-solute type MoSi₂ heating element. Its composition is expressed by (Mo_{1-x,} Wₓ)Si₂, the solute amount of W expressed by x being up to 45 mole %. The solute amount (x) is preferably 15 mole % or more, because at x less than 15 mole % the time for forming the protective SiO₂ film is long. On the other hand, when the solute amount (x) exceeds 45 mole %, the vaporization of W occurs so vigorously that the formation of a dense protective SiO₂ film becomes difficult. The solute amount (x) is preferably from 20 to 40 mole %.

The impurities of the W-solute type MoSi₂, i.e., the elements other than Mo, Si, W, are limited as described hereinabove in the MoSi₂. MoSi₂ and (Mo_{1-x,} Wₓ)Si₂ are hereinafter referred to the MoSi₂-based ceramic as a general term.

In order to enhance the mechanical strength to a high level, the MoSi₂-based ceramic may contain the strengthening secondary phase(s), which is not detrimental to the heating element. The average particle size of the strengthening secondary phase(s) should be 5µm or less. The strengthening phase(s) can be at least one selected from the group consisting of MoB, Mo₂B, MoB₂, Mo₂B₅, WB, W₂B, WB₂, W₂B₅, SiC, HfO₂, ZrO₂, HfB₂, ZrB₂, TiB₂, TiB, HfC, ZrC, TiC and Si₃N₄, and is preferably MoB. The amount of strengthening secondary phase(s) can be up to 35% by volume, preferably from 5 % to 35 % by volume. At more than 35 % by volume, the protective SiO₂ film is not desirably dense. More preferably, the amount of the strengthening secondary phase is from 10 % to 25 % by volume. In the MoSi₂-based ceramic composite, to which the strengthening secondary phase(s) is added, the impurities are evidently the elements except for Mo and Si or Mo, Si and W, and except for the elements of such phase(s). The amount of impurities such as Fe, Ti, Zr, and the like can be determined by analyzing the MoSi₂-based ceramic, prior to adding the particles of the strengthening secondary phase(s).

The average particle size of the raw materials is 5µm or less. That is, MoSi₂, (Mo_{1-x,} Wₓ)Si₂, MoB, Mo₂B, MoB₂, Mo₂B₅, WB, W₂B, WB₂, W₂B₅, SiC, HfO₂, ZrO₂, HfB₂, ZrB₂, TiB₂, TiB, HfC, ZrC, TiC and Si₃N₄ each has an average particle size of 5µm or less, because a dense sintered product cannot be obtained at average particle size of more than 5µm. It is preferable that the average particle size is less than 2µm.

Now is described a method for producing a MoSi₂-based ceramic heating element, which is particularly used in a heat treatment furnace for producing the semiconductor devices, and which has a satisfactorily long life because the low-temperature oxidation is prevented.

The above-described raw material powder, which has been treated by air-flow crushing, is weighed in a predetermined amount. Water and an appropriate organic binder are added to the raw material powder, which is then kneaded thoroughly, for example, for 15 minutes, by means of, for example, a kneader. In the commercially available MoSi₂ heating element, natural clay such as bentonite is used mostly. The bentonite usually consists of SiO₂, Al₂O₃ and H₂O, and further contains such impurities as Fe₂O₃, CaO, MgO and Na₂O. These impurities exert detrimental influence upon the low-temperature oxidation. Therefore, not the natural clay but an organic binder is used in the present invention. The organic binder can be removed in the degreasing and sintering steps to the limited impurity level of the present invention.

After kneading, water should be thoroughly absorbed in the binder in the curing step for, for example 48 hours or longer, in a sealed box, where drying is prevented. The resultant kneaded mixture is extruded to rod shape, dried, degreased in reducing atmosphere, and then sintered under vacuum or in nonoxdizing atmosphere, such as nitrogen, argon or the like. The sintering temperature is preferably from 1650°C to 1800°C, because the sintering is not promoted satisfactorily at less than 1650°C, while grain coarsening occurs at more than 1800°C. It is difficult to obtain the dense protective SiO₂ film in these cases.

In the bending and welding steps subsequent to the sintering step, white fumes of metal oxide due to selective oxidation may be formed. In order to prevent white fumes, the sintered compact should be preliminarily heated by current conduction or external heating, thereby forming a dense protective film. The temperature for satisfactorily forming the protective SiO₂ is from 1400°C to 1850°C. In the case of forming the protective SiO₂ film on the (Mo_{1-x,} Wₓ)Si₂, the temperature should be steadily held after each temperature rise of 100°C in a temperature range of 1100°C to 1500°C since the oxidation of W occurs abruptly upon sudden temperature rise and impedes the formation of a dense protective film. Here the temperature elevation is interrupted until generation of white fumes terminates. On the other hand, in the case of MoSi₂, as the purity of the raw materials are more enhanced, the formation of the protective SiO₂ film becomes more difficult but the destruction of such film is more deterred to lead a long life. When the raw materials with low purity, for example, natural clay such as bentonite, as in the conventional manner, are used in the process, the protective SiO₂ film is easily formed but its destruction speed at low temperature is high. Since the raw materials with high purity are used in the present invention, the heat treatment temperature and time should be higher and longer, respectively, than in the conventional case, provided that the protective film is of the same thickness in both cases. In the case of current conduction heating at a temperature higher than 1600°C, the MoSi₂ rod deforms and hence cannot maintain the original shape. The current conduction heating is, therefore, usually carried out at 1600°C or lower. The protective film formed in such a manner is from 2µm to 3µm thick or even thinner. The external heating is preferred to the current conduction heating for thicker protective film.

The bending is carried out in a temperature range of from 1450°C to 1600°C in the case of a MoSi₂ heating element, because at a temperature lower than 1450°C the thermal plasticity is not satisfactory, while at a temperature higher than 1600°C an appropriate shape of the work piece cannot be maintained due to excessive deformation. In the case of bending (Mo_{1-x,} Wₓ)Si₂ heating element, since the solid solution strengthening enhances deformation resistance at high temperature, the bending temperature should be higher than the case of MoSi₂ by approximately 50°C. The bending temperature is, therefore, in a temperature range of from 1500°C to 1650°C.

The heating-element parts may be welded with one another by fusion welding. A heating-element part and a terminal part may also be welded with one another by fusion welding. The welding temperature is in a range of from 1700°C to 1850°C both in the case of the MoSi₂ and (Mo_{1-x,} Wₓ)Si₂ heating elements, because at a temperature lower than 1700°C the obtained welding strength is not satisfactory, while at a temperature higher than 1850°C an appropriate welding shape cannot be maintained due to excessive deformation.

In the bending or welding step, SiO₂ film is removed from a part of the heating-element for power feeding. MoSi₂ is exposed at that part. Such exposed part must be again coated with the protective SiO₂ film before mounting in a heat treatment furnace and the like. The heating element, which has been manufactured as above, is perfectly coated by the dense protective SiO₂ film, that is, the heating element should not have any part free of the protective SiO₂ film. The heating element is then mounted on the shaped heat-insulating material or in a heat treatment furnace. The formation of the protective SiO₂ film is carried out by current conduction heating or by external heating in a temperature range of from 1400°C to 1850°C. At a temperature lower than 1400°C a satisfactory protective SiO₂ film is not obtained, while at a temperature higher than 1850°C the original shape of the heating element cannot be maintained due to excessive deformation.

Now are described important features of the molybdenum disilicide ceramic heating element, which are used in a low temperature, specifically 1000°C or lower, where the destruction of protective SiO₂ film occurs. It is noted that the temperature of an oxidation and diffusion furnace or an LP-CVD is 1000°C or lower.
(a) The molybdenum disilicide based ceramic has high purity. The purity of the protective SiO₂ film is thus so enhanced that its destruction and low temperature oxidation of the ceramic are deterred. The contamination of a semiconductor wafer can be prevented as well.
(b) A dense protective SiO₂ film is formed on the entire heating element and should have appropriate thickness. Since the protective SiO₂ film is not formed stably during the operation in a low temperature different from the case of operating in a high temperature, it is important that the protective SiO₂ film formed prior to the operation has properties as mentioned above.

The present invention is hereinafter described in more detail with reference to the examples and comparative examples.

### Example 1 and Comparative Example 1

Two kinds of MoSi₂ powder were prepared. One, "Raw Material A", was prepared by pulverizing the synthesized MoSi₂ by means of a ball mill using a conventional iron vessel and cemented carbide balls. The average particle size of this powder was 1.7µm. The other, "Raw Material B", was prepared by pulverizing the synthesized MoSi₂ by means of air-flow crushing. The average particle size of this powder was 1.9µm. The analysis results of the impurities of these materials are shown in Table 1. No impurities other than those shown in Table 1 were detected within the limits of analytical detection.

**Table 1**

| Impurities Content (mass %) of Raw Materials A and B | | | | | | | | |
|---|---|---|---|---|---|---|---|---|
| | Fe | Cu | W | Co | Al | Au | Ca | Remarks |
| Raw Material A | 0.35 | 0.001 | 0.21 | 0.15 | 0.03 | - | 0.001 | Comparative Ex.1 |
| Raw Material B | 0.02 | 0.001 | - | - | 0.02 | - | 0.001 | Ex.1 |

To the Raw Materials A and B (100 parts), 7.6 parts of the cellulose based organic binder were added. The MoSi₂ powder and the binder were blended in a kneader for 10 minutes under dry condition. To the total of mixture (100 parts), 12 parts of water were added, and they were kneaded for 20 minutes. The resultant kneaded mixture was cured for 3 days and then extruded into rods of 4 mm and 8 mm in diameter. After drying and degreasing, the sintering was carried out at 1750°C for 2 hours in vacuum. The rod-shape sintered compacts having 3 mm and 6 mm of diameter were produced.

### Examples 2-4 and Comparative Examples 2-5

The produced rod-sintered compacts having a diameter of 3 mm were subjected to the formation of a protective SiO₂ film under the condition given in Table 2. The thickness of the SiO₂ film formed is also shown in Table 2.

**Table 2**

| Protective SiO₂ Film Forming Treatment and Its Film Thickness | | | | | |
|---|---|---|---|---|---|
| Condition for Forming Protective Film | | | Thickness of Film (µm) | | Remarks |
| Heating Method | Temperature (°C) | Time (min) | Raw Material A | Raw Material B | |
| Current Conduction Heating | 1400 | 1 | 1.8 | porous | Compara.2 |
| | 1500 | 1 | 4.8 | 1.6 | Compara.3 |
| | 1600 | 1 | 22 | 2.4 | Compara.4 |
| External Heating | 1600 | 300 | 55 | 25 | Ex.2 |
| | 1700 | 120 | 180 | 43 | Ex.3 |
| | 1700 | 300 | - | 145 | Compara.5 |
| | 1800 | 30 | - | 63 | Ex.4 |

The cases using Raw Material A are all the Comparative. "Remarks" indicates the number of example or comparative examples using Raw Material B.

In Comparative Example 2, the film was porous. In Comparative Examples 3 and 4 the films are thin. In Comparative Example 5, the film was too thick. In the inventive Examples 2, 3 and 4, the high purity MoSi₂ was used, and satisfactory films with the appropriate thickness were obtained.

### Examples 5-7 and Comparative Examples 6-7

(Mo_{1-x,} Wₓ)Si₂ was synthesized to have the molar ratio x given in Table 3. The purity was the same as "B" in Table 1. The (Mo_{1-x,} W)Si₂ was pulverized by air-flow crushing down to 1.5µm of average particle size. The rod-shape sintered compacts having 3 mm and 6 mm in diameter were produced by the same method as in Example 1. The sintered compacts having 3 mm of diameter were heated up to 1500°C, while holding the temperature after each temperature-elevation of 100°C from 1100°C for approximately 1 minute until the generation of white fumes stops. Thickness of the protective SiO₂ film thus formed is shown in Table 3.

**Table 3**

| Protective SiO₂ Film Forming in (Mo_{1-x,}, Wₓ)Si₂ System | | |
|---|---|---|
| Value "x" of (Mo_{1-x,} Wₓ)Si₂ | Thickness of Protective Film (µm) | Remarks |
| 0.1 | 7 | Compara. 6 |
| 0.2 | 15 | Ex. 5 |
| 0.3 | 20 | Ex. 6 |
| 0.4 | 25 | Ex. 7 |
| 0.5 | porous | Compara. 7 |

From Tables 2 and 3, it is seen that the dense protective SiO₂ film can be more easily formed on the (Mo_{1-x,} Wₓ)Si₂ material than as compared with the case of MoSi₂ material.

### Examples 8-13 and Comparative Examples 8-9

Raw materials of MoSi₂ and (Mo_{0.6,} W_{0.4})Si₂ having the same level of purity as in Table 1 (Raw Material B) were prepared and pulverized by air-flow crushing. MoB, which was also pulverized by air-flow crushing, was prepared. The MoB was mixed with the MoSi₂ and (Mo_{0.6,} W_{0.4})Si₂ in the proportion shown in Table 4. The rod-shape sintered compacts having 3 mm and 6 mm of diameter were produced by the same method as in Example 1. The rod-shape sintered MoSi₂ compacts having 3 mm of diameter were subjected to the formation of a protective SiO₂ film by the external heating at 1600°C for 300 minutes as in Example 2. The rod-shape sintered (Mo_{0.6,} W_{0.4})Si₂ compacts having 3 mm of diameter were subjected to the formation of a protective SiO₂ film by the current conduction heating as in Example 5.

The material strength was evaluated by the three-point bending test of a span of 50 mm at the cross-head speed of 0.5 mm/min. In Table 4, the thickness of the protective SiO₂ film and the bending strength, which is an average value of ten specimens, are shown.

**Table 4**

| Film Thickness and Bending Strength of MoB Composite System | | | | |
|---|---|---|---|---|
| Matrix | Amount of MoB (Vol. %) | Thickness of Film (µm) | Bending Strength(MPa) | Remarks |
| MoSi₂ | 0 | 25 | 284 | Ex. 8 |
| | 10 | 29 | 324 | Ex. 9 |
| | 25 | 21 | 352 | Ex.10 |
| | 40 | porous | 330 | Compara.8 |
| (Mo_{0.6,}W_{0.4})Si₂ | 0 | 32 | 322 | Ex.11 |
| | 10 | 26 | 354 | Ex.12 |
| | 25 | 28 | 389 | Ex.13 |
| | 40 | porous | 340 | Compara.9 |

As is clear from Table 4, the bending strength of both MoSi₂ and (Mo_{0.6,}W_{0.4})Si₂ is improved by modifying them to the MoB-composite materials. When the MoB content is 40 % by volume, formation of the dense protective film becomes difficult.

### Examples 14-23 and Comparative Examples 11-17

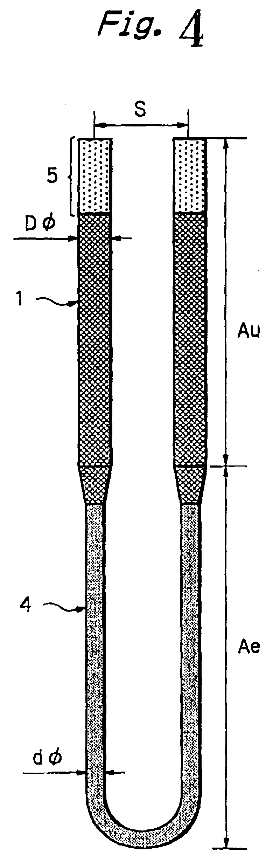

The rod-shaped sintered compacts having 3 mm and 6 mm of diameter, produced in Examples 2-7, 9-10, 12-13 and Comparative Examples 3, 5-9, were bent and welded into U-shaped heating element having dimension as shown in Fig. 4. The rods prepared from Raw Material A and of which the protective film was formed by current conduction heating at 1600°C for 1 minute (Comparative Example 10) were bent and welded into the U-shaped heating element as shown in Fig. 4, as well.

The terminal part 1 is 6 mm in diameter and is chamfered to form an R-shaped end, in which the diameter varies from 6 mm to 3 mm, which is the diameter of the element part 4. The so-produced heating elements were installed in a furnace and the furnace interior temperature was adjusted to 400°C, that is, the temperature of the element part 4 was approximately 500°C. The continuous current conduction test was carried out in such a condition. In Table 5, the time when the destruction of protective SiO₂ film starts is shown as "Continuous Current Conduction Life". The continuous current conduction life of all of the inventive examples is longer than 2400 hours. The inventive examples exhibit, therefore, an outstandingly improved low-temperature oxidation resistance over the conventional ones.

**Table 5**

| Continuous Current Conduction Life | | | |
|---|---|---|---|
| Production Condition of Materials | Thickness of Film (um) | Continuous Current Conduction Life (hours) | Remarks |
| Ex. 2 | 25 | 4050 | Ex. 14 |
| Ex. 3 | 43 | 6500 | Ex. 15 |
| Ex. 4 | 63 | 5900 | Ex. 16 |
| Ex. 5 | 15 | 2460 | Ex. 17 |
| Ex. 6 | 20 | 3900 | Ex. 18 |
| Ex. 7 | 25 | 4200 | Ex. 19 |
| Ex. 9 | 29 | 4680 | Ex. 20 |
| Ex. 10 | 21 | 4320 | Ex. 21 |
| Ex. 12 | 26 | 5380 | Ex. 22 |
| Ex. 13 | 28 | 4760 | Ex. 23 |
| Compara. 3 | 1.6 | 16 | Compara. 11 |
| Compara. 5 | 145 | 360 | Compara. 12 |
| Compara. 6 | 7 | 285 | Compara. 13 |
| Compara. 7 | porous | 8 | Compara. 14 |
| Compara. 8 | porous | 10 | Compara. 15 |
| Compara. 9 | porous | 7 | Compara. 16 |
| Compara.10 | 22 | 600 | Compara. 17 |

### Examples 24 and 25

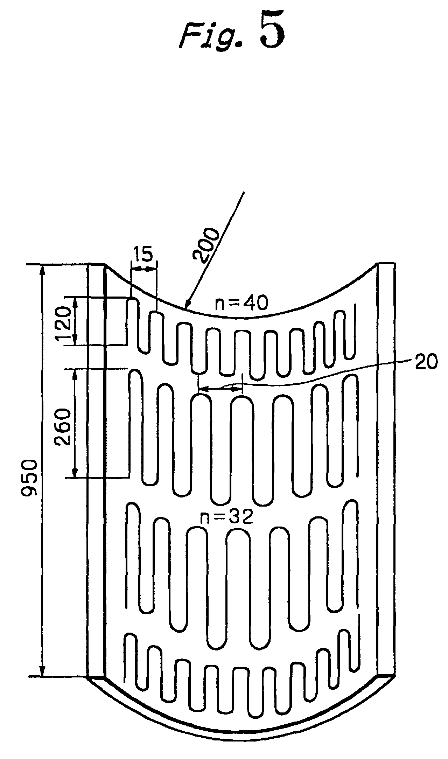

The material of Example 14, which uses in turn the material of Example 2, as well as the material of Example 22, which in turn uses the material of Example 12, were used to produce the meander-type multi-shank heating element as shown in Fig. 5. Two kinds of meander-type multi-shank heating elements were produced using rods of 3 mm in diameter. One element had forty (40) shanks with the shank pitch (d)of 15 mm and the shank length of 120 mm. The other had thirty two (32) shanks with the shank pitch (d) of 20 mm and the shank length of 260 mm. The 40-shank elements were mounted on a top and a bottom zones and the 32-shank elements were mounted on center zones of a semi-cylindrical heat-insulating mould of 200 mm in inner radius and 950 mm in length. This heat-insulating material was made of the ceramic fiber. A pair of semi-cylindrical mould mounted meander-type multi-shank heating elements were combined vertically to be a cylindrical heating element module.

In Fig. 5, "n" means a number of shank. A diffusion furnace equipped with this heating element module was evaluated in a customer. The heating element module using the material of Examples 14 and 24 both attained rapid thermal processing. The life of the heating element was about three years.

As is described hereinabove, the heating element according to the present invention eliminates the drawbacks of low-temperature oxidation which could not be overcome conventionally. Such heating element can be used in an oxidation and diffusion furnace, an LP-CVD furnace and the like for the production of semiconductor devices. Such heating element also enables rapid thermal processing. Highly integrated semiconductor devices can be produced at high productivity.

## Claims

1. A low-temperature oxidation resistant MoSi₂ based heating element, which comprises:
a body (1, 4) of the heating element consisting of MoSi₂ or (Mo_{1-x,} Wₓ)Si₂ (0<x≦0.45);
a power-feeding terminal part (1) having an electric conductive coating (5) thereon; and,
a protective SiO₂ film, characterized in that
said MoSi₂ or said (Mo_{1-x,} Wₓ)Si₂ contains impurities 0.1 mass % or less in total, and Fe, Cu, Au, Ca and Al among the impurities 0.05 mass % or less, in each and, further said protective SiO₂ film is from 10 to 100µm thick and covers the entire portion of the body of heating element except for the power-feeding terminal part.

2. A low-temperature oxidation resistant heating element according to claim 1, wherein said body of the heating element further contains at least one composite phase selected from the group consisting of MoB, Mo₂B, MoB₂, Mo₂B₅, WB, W₂B, WB₂, W₂B₅, SiC, HfO₂, ZrO₂, HfB₂, ZrB₂, TiB₂, TiB, HfC, ZrC, TiC and Si₃N₄ in a volume proportion of up to 35%.

3. Use of the low-temperature oxidation resistant heating element according to claim 1 or 2, to a heat treatment furnace for producing semiconductor devices, which is operated at a temperature of 1000°C or less.

4. A method for producing a low-temperature oxidation resistant heating element, which comprises the steps:
preparing the first powder consisting of MoSi₂ or (Mo₁₋ₓ, Wₓ)Si₂ (0<x≦0.45);
sintering the shaped compact, thereby obtaining a sintered compact; and,
subjecting the sintered compact to heating in oxidizing atmosphere, thereby forming a protective SiO₂ film on the sintered compact;
characterized by: preparing said first powder, impurities of which are 0.1 mass % or less in total, and Fe, Cu, Au, Ca and Al of which impurities are 0.05 mass % or less, in each; adding water and an organic binder to the first powder; kneading the first mixture; shaping the kneaded mixture to form a shaped compact; drying the shaped compact; degreasing, thereby removing the organic binder from the shaped compact; sintering the shaped compact at a temperature of from 1650°C to 1800°C in non-oxidizing atmosphere or in vacuum, thereby obtaining a sintered compact; and subjecting the sintered compact to a current conduction heating or external heating, thereby forming a protective SiO₂ film having a thickness of from 10µm to 100µm on the surface of the sintered compact.

5. A method according to claim 4, characterized by:
mixining said first powder and a second powder, which is at least on selected from the group consisting of MoB, Mo₂B, MoB₂, Mo₂B₅, WB, W₂B, WB₂, W₂B₅, SiC, HfO₂, ZrO₂, HfB₂, ZrB₂, TiB₂, TiB, HfC, ZrC, TiC and Si₃N₄ in a volume proportion of up to 35%, impurities which are 0.1 mass % or less in total, and Fe, Cu, Au, Ca and Al of which impurities are 0.05 mass % or less, in each; and,
subjecting the mixture of said first powder and said second powder to the adding, kneading, shaping, drying, degreasing, sintering and heating steps.
